# EUROPEAN PATENT APPLICATION

(11) **EP 2 356 917 A1**
(43) Date of publication of application: **17.08.2011**
(21) Application number: 11164862.2
(22) Date of filing: 21.05.2007
(51) Int. Cl.: A43D 25/18, B32B 38/10

(54) **An assembly of tapes for applying an adhesive layer to a surface of an object**

(30) Priority: 30.06.2006 IT UD20060170
(62) Divisional of application: 07734693.0
(71) Applicant: ALC Flenco Group S.r.L., 10051 Avigliana (IT)
(72) Inventor: Carraro, Angelo Lorenzo, 10051, AVIGLIANA (IT)
(74) Representative: Jorio, Paolo

(57) **Abstract**

An assembly of tapes for applying an adhesive layer (12) to a first surface (24) of an object (22); the assembly comprising a first (30) and a second tape (32); the first tape (30) comprising a supporting layer (15) and an adhesive layer (12) supported by the supporting layer (15); the second tape (32) having at least a cover layer (16) adhering more firmly to the adhesive layer (12) than the supporting layer (15) to the adhesive layer (12).

## Description

### TECHNICAL FIELD

The present invention relates to an assembly of tapes for applying an adhesive layer to a surface of an object, for example, an inner sole of a shoe, to obtain an object having at least one adhesive surface ready for gluing to another object, such as a shoe, with no further finishing operations required.

### BACKGROUND ART

On shoe manufacturing machines, a layer of adhesive is applied to an inner sole, to be glued to the inside of a shoe, by spraying or brushing on the adhesive in liquid form, i.e. dispersed or mixed in a liquid, e.g. solvent, such as alcohols, ethers, ketones, or hydrocarbons. One adhesive used, for example, is a solvent polychloroprene adhesive, which is brushed onto both the inner sole and the inside of the shoe. Once the solvent evaporates, i.e. once the adhesive dries, the inner sole and shoe are glued to each other.

Solvents are potentially toxic, however, and so require the use of suction hoods, which are expensive and complicated to install and maintain.

Using solvent on the inner sole, some often remains in the inner sole, even when the shoe is finished, and may result in irritation or allergy to the sole of the foot of the wearer.

Known adhesive application methods also involve numerous operations, many of which are performed manually, while others, such as drying the solvent, take a long time to complete, thus reducing the output of the shoe production line.

### DISCLOSURE OF INVENTION

It is an object of the present invention to provide an assembly of tapes, for applying an adhesive layer to a surface of an object, which enables to apply the adhesive layer in a fast manner, with a small number of operations and ensures a high degree of operator safety.

It is a further object of the present invention to provide an assembly of types able to avoid any additional finishing or surplus adhesive removing operations.

To eliminate the drawbacks of the known art, and to achieve these and other objects and advantages, the Applicant has researched, tested, and implemented the present invention.

The present invention is defined and characterized in the independent Claims.

The dependent Claims disclose other characteristics of the present invention or variations of the basic concept.

The adhesive layer is advantageously of solid adhesive, thus eliminating the need for fume and/or solvent suction hoods, reducing manufacturing cost, and safeguarding the health of the operators.

The object with the adhesive layer applied is thus obtained with no additional finishing or surplus adhesive removing operations required.

In the case of the inner sole applied with adhesive according to the invention, grip to the shoe is longer-lasting and resistant to withdrawal of the foot from the shoe.

Moreover, the object applied with adhesive is of superior finish quality, and undergoes no discolouration or staining caused by the use of solvent.

In other words, the assembly of tapes according to the invention advantageously enables to punch-cut the adhesive layer by removing the cover layer, which, in predetermined manner and accurately following the outer edge of the object, also takes with it the adhesive layer surrounding the object. The outer edge of the object, in fact, acts as a cutting edge for the adhesive layer, with no need for cutting dies shaped to match the object. Part of the adhesive layer remains evenly attached to the first surface of the object, and constitutes the adhesive layer by which to glue the object, while the part of the adhesive layer surrounding the object is removed selectively by the cover layer. As compared with conventional punch-cutting, the invention also has the advantage of not having to stop the production cycle and reset the machine alongside changes in the cutting edge, i.e. the type of object, on account of the machine adapting automatically to such changes, thus eliminating the downtime associated with the above operations. In the case in question, this is advantageous in the event of changes to the type and/or size of the inner sole to be applied with adhesive. Using the assembly of tapes according to the invention, inner soles of any type can thus be applied with adhesive continuously, for mass-production insertion inside the shoes.

### BRIEF DESCRIPTION OF THE DRAWINGS

A preferred, non-limiting embodiment of the present invention will be described by way of example with reference to the accompanying drawings, in which:
Figure 1 shows a three-dimensional view of a machine for applying an adhesive layer to a surface of an object using an assembly of tape according to the present invention;
Figure 2 shows a schematic side view of the Figure 1 machine;
Figure 3 shows, schematically, one step of a method for applying an adhesive layer to a surface of an object using an assembly of tape according to the present invention;
Figure 4 shows, schematically, a further step in the method for applying an adhesive layer to a surface of an object;
Figure 5 shows a schematic plan view of a further step in the method for applying an adhesive layer to a surface of an object.

### PREFERRED EMBODIMENT OF THE INVENTION

With reference to the accompanying drawings, a machine 10 is shown for applying an adhesive layer 12 to a first surface 24 of an object 22.

The term adhesive layer 12 is intended to mean both an adhesive film, typically flat and of constant and/or even thickness, and an adhesive layer of varying and/or uneven thickness, as, for example, when applied manually.

Object 22 may be substantially flat, i.e. of small thickness, such as an inner sole of a shoe, a badge, decoration, sign, article of clothing, or a furnishing item.

Alternatively, object 22 may be nonflat and thick and/or of complex shape, i.e. may be decidedly three-dimensional.

In the example shown, object 22 is an inner sole or so-called hygienic inner sole for a shoe, to which an adhesive layer 12 is applied to glue it to the inside of the shoe. In the example shown, the inner sole has a maximum length of approximately 40 to 50 cm, and a maximum width of approximately 10 to 20 cm.

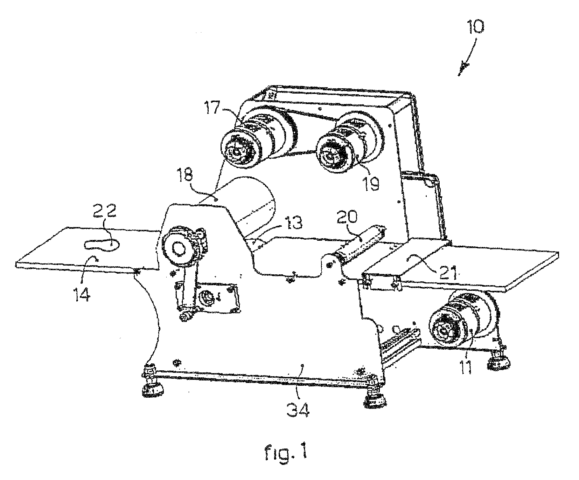

Object 22 is positioned, either manually or by automatic loaders, on a supporting surface 14 - in the example shown, horizontal - supported by a frame 34 (Figure 1).

Adhesive layer 12 advantageously comprises solid adhesive.

In one solution, the solid adhesive is a solid polymer adhesive.

Advantageously, the solid adhesive is a solid polymer adhesive of superior elastic or elastoplastic properties, i.e. extensibility, flexibility, tensile and shear strength.

The solid adhesive is advantageously an acrylic adhesive, such as, but not exclusively, an adhesive comprising acrylic acid, methacrylic acid, acrylic ester, methacrylic ester, hydroxyalkylacrylate, hydroxyalkylmethacrylate, or mixtures of these, and/or copolymers of vinylpyrrolidone or vinyl alcohol and acrylic acid or methacrylic acid.

Alternatively, the adhesive may be "hot-melt" or "gum resin" adhesive.

In one embodiment, the first tape 30, comprising adhesive layer 12, is a transfer film, with non-supported acrylic adhesive, of high resistance to temperature and ageing.

Machine 10 comprises first feed means 11, 13 for supplying a first tape 30, and second feed means 17, 18 for supplying a second tape 32, which are fitted in rotary manner to frame 34.

First tape 30 comprises adhesive layer 12, which is applied, e.g. coated, onto and supported by a supporting layer or "liner" 15. In other words, first tape 30 is a biadhesive member, in which a first adhesive surface is protected by supporting layer 15, and a second adhesive surface is available for gluing.

In the example shown, adhesive layer 12 is about 0.05 to 20 mm, and advantageously about 0.8 to 0.12 mm, thick, and supporting layer 15 is about 0.05 to 0.09 mm thick.

In the example shown, first tape 30 and second tape 32 are of 50 metres minimum length, and 50 cm minimum width.

Second tape 32, on the other hand, comprises a cover layer 16 made, for example, of silicone paper, and having a controlled or so-called removable adhesive, which sticks in predetermined selective manner to ensure a given grip to the adhesive layer, and to adhere less or not at all to first surface 24 of object 22.

For example, second tape 32 is a so-called masking tape, but with removable adhesive, so that cover layer 16 leaves no residual adhesive once it is removed.

In the example shown, cover layer 16 is about 0.05 to 0.09 mm thick.

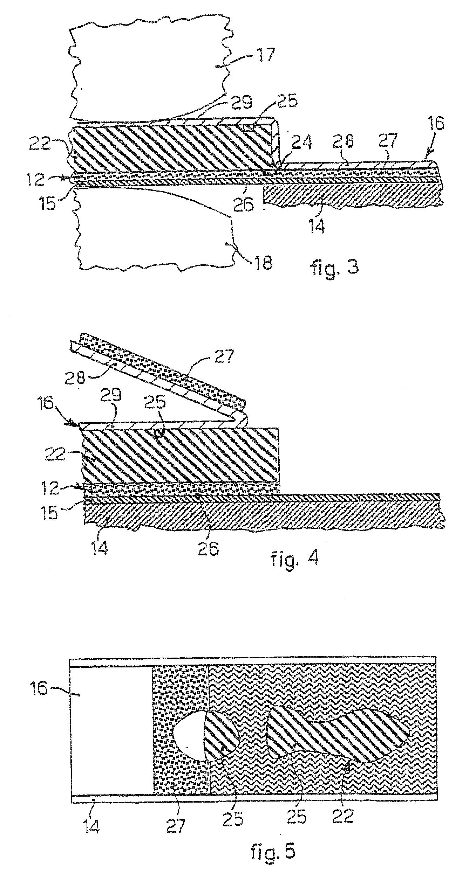

In one embodiment of the invention, adhesive layer 12 adheres more strongly to cover layer 16 than to supporting layer 15, so that, when supporting layer 15 is applied to adhesive layer 12, and cover layer 16 is applied to adhesive layer 12, removal of cover layer 16 from adhesive layer 12 detaches adhesive layer 12 completely from supporting layer 15, and transfers adhesive layer 12 to cover layer 16 (Figure 5).

First feed means 11, 13 comprise a first reel-off roller 11 for feeding first tape 30 to a first pressure roller 13.

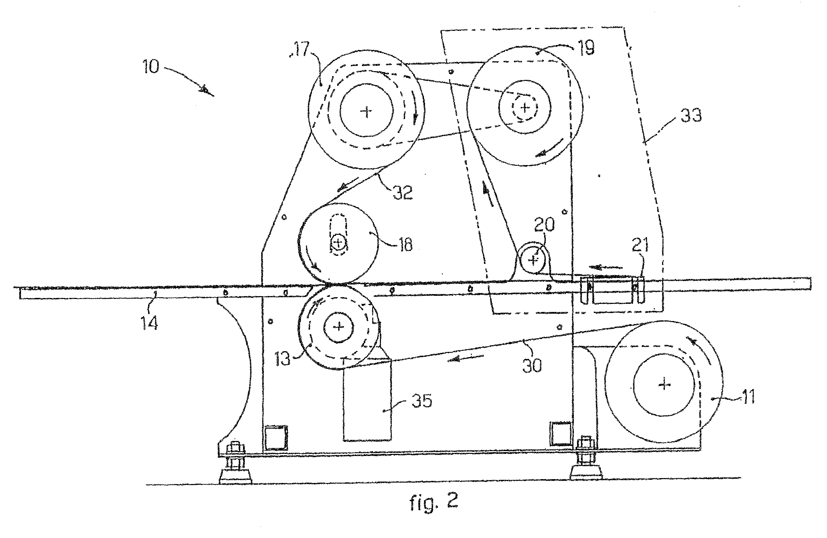

First pressure roller 13 is located substantially on a level with, or slightly below, supporting surface 14, and rotates about a respective axis of rotation to feed first tape 30 to supporting surface 14, and to bring a first part 26 of adhesive layer 12 into contact with first surface 24 (Figure 2). In the example shown, first tape 30 is fed as described above, with adhesive layer 12 facing upwards, and supporting layer 15 facing downwards (Figure 3).

Second feed means 17, 18 comprise a second reel-off roller 17 for feeding second tape 32 to a second pressure roller 18.

Second pressure roller 18 is located substantially on a level with, or slightly above, supporting surface 14, is advantageously aligned with first pressure roller 13, and rotates about a respective axis of rotation, parallel to the axis of rotation of first pressure roller 13, to feed second tape 32.

Object 22 is inserted in steps between first pressure roller 13 and second pressure roller 18, which advantageously rotate synchronously to feed object 22 effectively between the rollers.

First pressure roller 13 may be driven by a motor 35 (Figure 2) to rotate first reel-off roller 11 and, optionally, second pressure roller 18.

Alternatively, first pressure roller 13 and second pressure roller 18 are idle and rotated by first reel-off roller 11 and second reel-off roller 17 respectively.

Second tape 32 is thus applied to object 22 - in the example shown, to a second surface 25 opposite first surface 24 - to cover object 22 completely.

More specifically, second pressure roller 18 brings a first portion 28 of cover layer 16 into contact with a second part 27 of adhesive layer 12 - i.e. the part surrounding object 22, when object 22 is positioned on first tape 30 - and brings a second portion 29 of cover layer 16 into contact with said second surface 25 (Figure 3).

This is made possible by virtue of the length and width of first and second tapes 30 and 32, as stated, being greater than those of object 22 (Figure 5).

First pressure roller 13 and the second pressure roller cooperate with each other to press first part 26 on first surface 24, so that they adhere to each other, and to press first portion 28 on second part 27, so that they too adhere to each other.

First pressure roller 13 and second pressure roller 18 are advantageously positioned substantially contacting, e.g. in sliding contact, or slightly apart, to press first tape 30 on first surface 24 of object 22, and second tape 32 on second surface 25 of object 22.

For this reason, at least part, e.g. the lateral surface, of first pressure roller 13 and second pressure roller 18 is made of deformable material.

By deformable material is meant a material which deforms under pressure and returns to its original shape once pressure is released, that is, a material of superior elastic and/or elastoplastic properties, i.e. extensibility, flexibility, tensile and shear strength, such as an elastic and/or elastoplastic polymer, such as silicone, or silicone rubber, e.g. methyl vinyl silicone, of 25 to 70 Shore A hardness.

In one embodiment, a silicone of 30 Shore A hardness is used.

In one embodiment, first pressure roller 13 and second pressure roller 18 have a brushlike lateral surface defined by more or less elastic bristles of predetermined hardness, which adapt effectively to the shape of a thick and/or irregular-, complex-shaped, i.e. nonflat, object 22.

Despite the reaction force of object 22 compressed between first tape 30 and second tape 32, first and second pressure rollers 13, 18, being deformable, advantageously exert uniform pressure on second tape 32 to stick it correctly to second surface 25 and effectively to second portion 27 of adhesive layer 12 surrounding object 22, and to press and stick first portion 26 of adhesive layer 12 correctly onto first surface 24, so that, despite the difference in height between second surface 25 and adhesive layer 12, cover layer 16 adheres evenly to both object 22 and to adhesive layer 12 exceeding the outer edge of object 22, i.e. second part 27 of adhesive layer 12.

Given the structural, elastic and/or elastoplastic characteristics of adhesive layer 12, this can advantageously be detached completely from supporting layer 15, along the outer edge of object 22 which acts as a cutting edge, even if cover layer 16 does not adhere completely to second part 27, i.e. even if there are areas of second part 27, e.g. extending about 0 to 1 mm beyond the outer edge of object 22, to which cover layer 16 does not adhere.

The distance or gap between first and second pressure roller 13, 18, and the material from which they are made, are obviously selected according to the type, shape, and material of object 22.

In one variation, the lateral surface of first pressure roller 13 and second pressure roller 18 is knurled to improve the pressure exerted on object 22.

In another variation, first and second pressure roller 13, 18 are movable towards each other to exert pressure on object 22.

Machine 10 also comprises a peeling unit 33 for engaging second tape 32, in particular cover layer 16, and removing it from object 22.

By virtue of the adhesive characteristics of adhesive layer 12 described above, second part 27 of adhesive layer 12 is thus detached from object 22 (Figure 4).

Peeling unit 33 is located downstream from first and second pressure roller 13, 18 (Figure 2).

Handling between peeling unit 33 and the first and second pressure roller is made possible by peeling unit 33 substantially drawing second tape 32 - which is integral with adhesive layer 12, in turn integral with object 22 and supporting layer 15 - in a direction substantially parallel to and lengthwise of supporting surface 14.

In one embodiment, peeling unit 33 comprises a take-up roller 19 for rewinding second tape 32, to the cover layer 16 of which the peeled off adhesive layer 12 adheres.

Peeling unit 33 also comprises a plate 21, which is substantially parallel to and located a given height off supporting surface 14, and cooperates with second tape 32 to detach it from object 22. In the example shown, plate 21 diverts and folds second tape 32 roughly 180° in the opposite direction to the travelling direction of object 22.

A guide roller 20 is located between plate 21 and take-up roller 19 to recover second tape 32 from plate 22 and feed it back to take-up roller 19.

Take-up roller 19 and second reel-off roller 17 are advantageously powered by one motor (not shown), and connected by common drive means, such as belts or chains, to rotate synchronously.

In the example shown, take-up roller 19 is driven, and in turn drives second tape 32 and, therefore, also second reel-off roller 17.

Finally, object 22 is detached easily from supporting layer 15, which, as stated, adheres less strongly to adhesive layer 12 than adhesive layer 12 to first surface 24 of object 22.

Object 22 applied with adhesive can be glued easily to another object, e.g. in the case of an inner sole, this is inserted into and glued to the inside of a shoe. In the case of a high-heeled shoe, or at any rate a closed shoe and/or a shoe with a steeply sloping foot supporting surface, adhesive layer 12 of inner sole 22 may be wetted, e.g. with water or other liquid, to slide the adhesive inner sole 22 in smoothly to glue it evenly and effectively to the shoe.

Clearly, to machine 10 and the method for applying an adhesive layer to a surface of an object, as described herein, changes may be made and/or parts and/or steps added.

For example, in a variation, machine 10 comprises a draw unit located downstream from peeling unit 33, i.e. downstream from plate 21, and substantially comprising two rotating rollers arranged in the same way as pressure rollers 13, 18, and which are driven by a motor to draw supporting layer 15 - to which object 22 is still attached by adhesive layer 12 - so that it is held taut, with no creasing or folds which could hinder or slow down throughput.

## Claims

1. An assembly of tapes for applying an adhesive layer (12) to a first surface (24) of an object (22); the assembly comprising a first (30) and a second tape (32); said first tape (30) comprising a supporting layer (15) and an adhesive layer (12) supported by said supporting layer (15); said second tape (32) having at least a cover layer (16) adhering more firmly to said adhesive layer (12) than said supporting layer (15) to said adhesive layer (12).

2. An assembly as claimed in Claim 1, **characterized in that** said adhesive layer (12) comprises a solid adhesive.

3. An assembly as claimed in Claim 1, **characterized in that** said adhesive layer (12) comprises a solid adhesive polymer.

4. An assembly according to Claim 1, **characterized in that** that said adhesive layer (12) comprises an acrylic adhesive comprising an acrylic acid or methacrylic acid or acrylic ester or methacrylic ester or hydroxyalkylacrylate, hydroxyalkylmethacrylate, or mixtures of these, and/or copolymers of vinylpyrrolidone or vinyl alcohol and acrylic acid or methacrylic acid.

5. An assembly according to Claim 1, **characterized in that** said adhesive layer (12) is about 0.05 to 20 mm thick.

6. An assembly according to Claim 1, **characterized in that** said adhesive layer (12) is about 0.8 to 0.12 mm thick.

7. An assembly according to Claim 1, **characterized in that** said supporting layer (15) is about 0.05 to 0.09 mm thick.

8. An assembly according to Claim 1, **characterized in that** said cover layer (16) is about 0.05 to 0.09 mm thick.

9. An assembly according to claim 1, **characterized in that** said cover layer (16) comprises a silicone paper, having a controlled removable adhesive, which sticks in predetermined selective manner to ensure a given grip to the adhesive layer (12), and to adhere less or not at all to the first surface of the object (22).

10. Use of an assembly of tapes as claimed in Claim 1 in a machine for applying an adhesive layer (12) to a first surface (24) of an object (22) and comprising
- first feed means (11, 13) for supplying the first tape (30), having said adhesive layer (12) on one face, so that a first part (26) of said adhesive layer (12) contacts said first surface (24) of said object (22);
- second feed means (17, 18) for supplying the second tape (32), having a cover layer (16) on one face, to completely cover said object (22) so that a first portion (28) of said cover layer (16) contacts a second portion (27) of said adhesive layer (12) surrounding said object (22), and a second portion (29) of said cover layer (16) contacts said second surface (25); said first feed means (11, 13) and said second feed means (17, 18) cooperating with each other to press said first part (26) of said adhesive layer (12) on said first surface (24), so that they adhere to each other, and to press said first portion (28) of said cover layer (16) on said second part (27) of said adhesive layer (12), so that they adhere to each other;
- a peeling unit (33) for removing said cover layer (16) from said object (22) to detach said second part (27) of said adhesive layer (12) from said object (22).

11. Use of an assembly of tapes as claimed in Claim 1 in a machine for applying an adhesive layer (12) to a first surface (24) of an object (22) and comprising a first and a second deformable roller for exerting pressure on said second tape (32), on said object (22) and on said first tape (30).
